(19) **Europäisches Patentamt European Patent Office Office européen des brevets**

(11) **EP 3 384 779 A1**

(12) **EUROPEAN PATENT APPLICATION**

(43) Date of publication:
**10.10.2018 Bulletin 2018/41**

(21) Application number: **17305408.1**

(22) Date of filing: **05.04.2017**

(51) Int Cl.:
*A23C 1/04* (2006.01)    *A23C 1/05* (2006.01)
*A23C 1/08* (2006.01)    *A23C 1/14* (2006.01)
*A23C 1/16* (2006.01)    *A23C 9/152* (2006.01)
*A23C 9/154* (2006.01)    *A23C 9/156* (2006.01)
*A23C 9/16* (2006.01)    *A23C 21/06* (2006.01)
*A23C 21/08* (2006.01)    *A23J 3/00* (2006.01)
*A23J 3/04* (2006.01)    *A23J 3/08* (2006.01)
*A23J 3/14* (2006.01)    *A23L 33/17* (2016.01)
*A23L 33/185* (2016.01)    *A23L 33/19* (2016.01)
*A23L 33/125* (2016.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicants:
• **Institut National de la Recherche Agronomique (INRA)**
**75007 Paris (FR)**
• **Institut Supérieur des Sciences Agronomiques, Agroalimentaires, Horticoles et du Paysage (AGRO CAMPUS QUEST)**
**35000 Rennes (FR)**

(72) Inventors:
• **Famelart, Marie-Hélène**
**35000 Rennes (FR)**
• **Croguennec, Thomas**
**35000 Rennes (FR)**
• **Schuck, Pierre**
**35131 Chartres de Bretagne (FR)**
• **Schong, Elise**
**57160 Rozerieulles (FR)**

(74) Representative: **Jacobacci Coralis Harle**
**32, rue de l'Arcade**
**75008 Paris (FR)**

(54) **STABILIZED PROTEIN AGGREGATE PARTICLES, AND PROCESS FOR THE PREPARATION OF SAID PARTICLES**

(57)     The present invention concerns a process for the preparation of stabilized protein aggregate particles, wherein said process comprises the following steps:
a) providing an aqueous solution wherein are dispersed proteins and at least one reducing sugar,
b) adjusting the pH of the aqueous solution obtained in step a), to a pH above 7,
c) drying the aqueous solution obtained in step b), to form powder particles comprising said proteins and said at least one reducing sugar,
d) dry heating said powder particles obtained in step c), to form said stabilized protein aggregate particles.

EP 3 384 779 A1

## Description

TECHNICAL FIELD OF THE INVENTION

The invention relates to the field of protein aggregate particles.

More precisely the invention relates to a process for the preparation of stabilized protein aggregate particles, as well as the protein aggregate particles obtained thanks to said process.

BACKGROUND INFORMATION AND PRIOR ART

Proteins are widely used in several technical fields and industries, notably in food ingredients due to the nutritional and textural properties they add to food products.

Many researches are investigating on increasing the functional properties of proteins, mainly by applying denaturating and aggregating processes such as heat treatments.

Whey proteins are well known proteins, purified from milk. These proteins are of widespread use in the food industry, due to their high nutritional and functional properties.

While a lot of works has been dedicated to heat treatments of whey proteins in a solution, very few studies considered the heating process of these proteins as applied through a dry heating step, say by applying heat on a powder or a slurry.

For example, Gulzar et al. (Food Chemistry; 129 (2011) 110-116) studied the changes induced in a whey protein isolate (WPI) powder by a dry heating step at different pH values of acidic range (2.5, 4.5 and 6.5), at different temperature / time combinations (80°C up to 3 days, or 100°C for up to 24 hours or 120°C up to 3 hours) and at different water activities ($a_w$).

However, most of known protein aggregate particles, notably issued from whey proteins (e.g. as disclosed in Gulzar et al.), have several disadvantages: deficient stability during the concentration or the drying process needed for their preparation, form and size of the rehydrated particles are dependent on the fine composition of the protein solution and variable from a concentrate to another.

SUMMARY OF THE INVENTION

Therefore, the present invention addresses the above-mentioned problems by providing a new process suitable to obtain protein aggregate particles whereof the stability is improved and whereof the form and size of the rehydrated particles are related to the powder before dry heating step.

In a first aspect, the invention provides a process for the preparation of stabilized protein aggregate particles, wherein said process comprises the following steps:

a) providing an aqueous solution wherein are dispersed proteins and at least one reducing sugar,
b) adjusting the pH of the aqueous solution obtained in step a), to a pH above 7,
c) drying the aqueous solution obtained in step b), to form powder particles comprising said proteins and said at least one reducing sugar,
d) dry heating said powder particles obtained in step c), to form said stabilized protein aggregate particles.

In a second aspect, the invention provides protein aggregate particles (named also "stabilized protein aggregate particles") obtained by the process of the invention.

In a third aspect, the invention provides a composition wherein are dispersed protein aggregate particles of the invention, advantageously selected among foodstuff composition, medical composition, cosmetic composition.

BRIEF DESCRIPTION OF THE DRAWINGS

Fig. 1 shows the browning index for dry heated powders on two different assays. Legend: browning index in function of time of dry heating (h).

Fig. 2 shows the particle sizes (nm) in the solution 1 for powders dry heated at pH 3.5 and 6.5 and in the solution 2 for powders dry heated at pH 9.5 (A), the particle sizes ($\mu$m) in the solution 1 for powders dry heated at pH 9.5 (B), and the particle size distribution (% in function of $\mu$m) for powders dry heated at pH 9.5 during the time course of dry heating (h) (C).

Fig. 3 shows the weight of the wet and dry pellet (A: weight in wet pellet g/g - B: weight in dry pellet g/g), and the water entrapped in the pellet of particles in g of water entrapped in 1 g of dry particles (C).

Fig. 4 shows the morphology of powder grains (A) observed by optical microscopy (bar=50 $\mu$m) and of stabilized protein aggregate particles (B) observed by confocal scanning laser microscopy during the time course of the dry heating (bar=200 $\mu$m).

Fig. 5 shows, the residual native proteins (%) during the time course of the dry heating (h) (BSA=bovine serum albumin, big = $\beta$-lactoglobulin, alac = $\alpha$-lactalbumin) at pH 3.5 (A), 6.5 (B) and 9.5 (C).

Fig. 6 shows the morphology of powders grinded for time 0-25 s and dry heated for 12 h observed by optical microscopy (bar = 30 $\mu$m) (A) and of the stabilized protein aggregate particles observed by confocal scanning laser microscopy (bar = 200 $\mu$m) (B).

Fig. 7 shows the size distribution (% in function of $\mu$m) of the spray dried powder before and after 36 h of dry heating (A) and of the dry heated for 12 h and of the stabilized protein aggregate particles at 12h-36h of dry heating (B). The peak maximum of the distribution is given.

Fig .8 shows the morphology of the stabilized protein aggregate particles after dry heating of a spray dried powder.

Fig. 9 shows the residual native concentration of proteins (g/L) during the time course of the dry heating of spray dried powder (h). Two repetitions are shown.

Fig 10 shows the weight in wet pellet in g/g (A), the weight in dry pellet in g/g (B) and the water entrapped in the pellet of particles in g of water entrapped in g of dry particles (C), as a function of time of dry heating (h).

Fig.11 shows the morphology of the stabilized protein aggregate particles after 3 h or 36 h of dry heating of a freeze-dried powder in the presence of added lactose (in g/10g of protein, i.e. respectively 0, 0.05, 0.21, 0.83, 2.09).

Fig. 12 shows the weight in dry pellet in g/g (A), and the water entrapped in the pellet of particles in g of water entrapped in 1 g of dry particles (B), in function of the lactose added in g/10g of protein. Legend: bold circle for 36 h of dry heating; empty circle for 3 h of dry heating

DETAILED DESCRIPTION OF THE INVENTION

The present invention relates to a process for the preparation of new stabilized protein aggregate particles, as well as the protein aggregate particles obtained by said process.

In the present specification, the particles disclosed (notably powder particles and stabilized protein aggregate particles) may have different size, shape and water activity ($a_w$).

Typically, water activity, or $a_w$, is the partial vapor pressure of water in a substance (i.e. particle) divided by the standard state partial vapor pressure of water.

**Process for the preparation of new particles**

The process according to the invention comprises the main following steps:

a) providing an aqueous solution wherein are dispersed proteins and at least one reducing sugar,
b) adjusting the pH of the aqueous solution obtained in step a), to a pH above 7,
c) drying the aqueous solution obtained in step b), to form powder particles comprising said proteins and said at least one reducing sugar,
d) dry heating said powder particles obtained in step c), to form said stabilized protein aggregate particles.

Step a) Providing a proteins / sugar aqueous solution

In the first step a), it is provided an aqueous solution wherein are dispersed proteins and at least one reducing sugar.

Proteins are advantageously selected in the group consisting of whey or milk proteins, egg proteins, vegetable proteins.

Whey / milk proteins, dispersed in the aqueous solution, are advantageously issued from the group consisting of whey protein isolate (WPI), whey protein concentrate (WPC), whey powder, milk protein concentrate (MPC), milk protein isolate (MPI) and skim milk powder.

Generally, milk is a pale liquid produced by the mammary glands of mammals, e.g. cow, buffalo, goat, sheep, horse.

Whey is the liquid remaining after milk has been curdled and strained. It is usually a byproduct of the manufacture of cheese or casein. Sweet whey is manufactured during the making of rennet types of hard cheese like Cheddar or Swiss cheese. Acid whey (also known as "sour whey") is a byproduct produced during the making of acid types of dairy products such as cottage cheese or strained yogurt. Whey is also obtained through a fractionation step by using a membrane process such as ultrafiltration of skim milk.

Whey proteins consist typically of a combination of beta-lactoglobulin, alpha-lactalbumin, bovine serum albumin (BSA) and immunoglobulins.

Whey protein concentrate comprises typically from 29% to 89% protein by weight. It also has a low (but still significant) level of fat and cholesterol but, in general, compared to the other forms of whey protein, has higher levels of bioactive compounds, and carbohydrates in the form of lactose from 5 to 55%.

Whey protein isolate are more than 90% protein by weight. It is processed to remove the fat, lactose and minerals. Final content of lactose in WPI is 2-5% by weigh.

Whey powder is obtained by removing water from whey. His moisture content is usually between 2 and 5 %.

Milk protein concentrate (MPC) is any type of concentrated milk product that contains from 40 to 90% milk protein. It is also defined as any complete milk protein (casein plus whey proteins) concentrate that is 40 percent or more protein by weigh.

Milk Protein Isolate (MPI) is the substance obtained by the partial removal of sufficient non-protein constituents (lactose and minerals) from skim milk so that the finished dry product contains 90% or more protein by weight. It contains the casein and whey proteins in their original proportions found in milk, without combining separately produced casein (caseinate) and whey proteins.

Skim Milk Powder is obtained by removing water from pasteurized skim milk. It contains 5% or less moisture (by weight) and 1.5% or less milkfat (by weight) and a minimum milk protein content of 34%.

Egg proteins are advantageously selected from the group consisting of egg white powder.

Vegetable proteins are advantageously selected from the group consisting of any vegetable concentrate or isolate, such as soya or pee concentrate or isolate, and is obtained by removing water from the protein solution.

The solution contains also at least one reducing sugar, i.e. a sugar which is capable of acting as a reducing agent because it has a free aldehyde group or a free ketone group.

All monosaccharides are reducing sugars, along with some disaccharides, and oligosaccharides.

The monosaccharides can be divided into two groups: the aldoses, which have an aldehyde group, and the ketoses, which have a ketone group.

Reducing sugars react with amino acids in the Maillard reaction, a series of reactions that occurs while cooking food at high temperatures and that is important in determining the flavor of food

The at least one reducing sugar is advantageously selected from the group consisting of lactose, glucose, galactose, maltose, fructose or their derivatives including glucose-6-phosphate and any oligosaccharide or saccharide conjugate that contains a reducing sugar.

Preferably, the reducing sugar is lactose. Indeed, as shown in the Examples, lactose seems to accelerate the crosslinking reaction kinetic of stabilized protein aggregate particles; furthermore, the addition of lactose allows protein more cross-linked within stabilized protein aggregate particles.

Said at least one reducing sugar can be inherently present with the proteins added (e.g. in WPI) and/or it can be added to obtain a target concentration.

To obtain a suitable aqueous solution, the proteins and the at least one reducing sugar are dissolved in an aqueous medium, which is preferably water.

In practice, the aqueous solution is advantageously prepared from:

- a dispersion operation of said proteins and of said at least one reducing sugar, possibly in a dried form, in an aqueous medium, or
- protein isolate or protein concentrate (e.g. WPI, WPC, whey powder, MPC, MPI or skim milk powder), whereof proteins content is of at least 35% w/w.

The aqueous solution, in step a), comprises advantageously a ratio, in weight, of 1 protein out of 0.02 to 0.6 reducing sugar (in other words a ratio of 1 g protein for 0.02 to 0.6g reducing sugar, or a ratio protein / reducing sugar from 1,7 to 50).

Typically, the aqueous solution comprises the following protein / reducing sugar concentrations, by weight based on the total weight of the solution:

- a protein concentration ranging from 100 to 200 g/kg, and
- a reducing sugar concentration of 1 to 60 g/kg.

Step b) Adjusting the pH of the aqueous solution

In second step b), the pH of the aqueous solution, obtained in step a), is adjusted to a pH above 7 (basic range).

Typically, the pH, to which the aqueous solution is adjusted, is from 7 to 11.5, and preferably from 9 to 11.5.

The pH adjustment is for example made by addition of NaOH in the aqueous solution.

Step c) Drying the aqueous solution

In third step c), a drying operation is implemented to the aqueous solution obtained in step b), to form powder particles (named also "powder grain") comprising said proteins and said at least one reducing sugar.

The drying operation (or dehydration process) aims at removing the water of the aqueous solution by evaporation, up to obtain the powder particles.

Said drying operation is advantageously selected among freeze drying and spray drying.

Freeze drying is technically known also as lyophilisation, lyophilization or cryodesiccation. Freeze drying works by freezing the powder particles and then reducing the surrounding pressure to allow the frozen water in the powder particles to sublimate directly from the solid phase to the gas phase. The liquid is frozen at -40°C, then the surrounding pressure is reduced at lower than 0.5 mbar to allow the frozen water in the material to sublimate directly at 25°C from the solid phase to the gas phase.

Spray drying is a method of producing a dry powder from a liquid or slurry by rapidly drying with a hot gas. Such a method is implemented with a spray dryer, which takes a liquid stream and separates the solute or suspension as a solid (i.e. the powder particles) and the solvent into a vapor (i.e. the aqueous medium); the liquid input stream is sprayed through a nozzle into a hot vapor stream and vaporized; solids form as moisture quickly leaves the droplets.

In spray drying, a nozzle is usually used to make the droplets as small as possible, maximizing heat transfer and the rate of water vaporization. Droplet size advantageously ranges from 50 to 200 $\mu$m.

Typically, this step c) is implemented to obtain powder particles having a water activity ($a_w$) from 0.1 to 0.6.

Moreover, this step c) is implemented to obtain powder particles having a mean diameter in the range 10 to 400 $\mu$m.

Crushing of the powder particles

After drying in step c) and before the dry heating step of step d), the process can comprise an operation of crushing the powder particles.

This operation aims at lowering the size of the powder particles issued from step c).

Depending on the used grinding mill, the step is implemented to obtain powder particles having a size range greater than or equal to 10 $\mu$m.

Adjustment of the water activity of the powder particles

After drying in step c) and before the dry heating step of step d), the process can comprise an operation of adjusting the water activity of the powder particles.

Preferably, said operation of adjusting the water activity of said powder particles is implemented to obtain powder particles having a water activity from 0.1 and 0.6.

This operation is for example implemented at 20°C, in a saturated salt solution, advantageously selected from $CH_3COOK$, $MgCl_2$, $K_2CO_3$, for several weeks (e.g. 2 weeks).

Step d) Dry heating of said powder particles

In step d), the powder particles obtained in step c) are then dry heated to form the stabilized protein aggregate particles.

The terms "dry heated" relates typically to the utilization of hot air applied on the powder packed into tightly sealed containers.

The powder particles can be, for example, dry heated:

- at a temperature between 60°C and 120°C, and
- for a time range between 30 minutes and 4 days, preferably from 6 to 24 hours.

Typically, this step d) is implemented to obtain particles having a water activity ($a_w$) from 0.1 to 0.6.

For Example, dry heating at pH 9.5 of a whey protein concentrate powder at 100°C for 36 h at an $a_w$ close to 0.2 can produce stable particles with size related to the powder grain size.

The three proteins beta-lg, alpha-lac and BSA were equally integrated into these particles, and only 20 % of these proteins were still native at the end of the dry heating.

## Stabilized protein aggregate particles

The process according to the invention allows obtaining stabilized protein aggregate particles (named also "macroparticles" or MICA for "Micron Aggregates").

When reconstituted at 10 g.kg$^{-1}$ into water, these stabilized protein aggregate particles advantageously comprise:

- from 1 to 4%, by weight, of dry matter relative to the total weight of the said final composition,
- from 90 to 99 %, by weight of water relative to the total weight of the said final composition.

When protein is chosen among whey proteins, then stabilized protein aggregate particles consist in whey protein macroparticles (or WPM).

In said particles, typically, βlactoglobuline, αlactalbumin and BSA are equally integrated; and only about 20 % of these proteins are still native at the end of the dry heating.

The process of the invention allows obtaining two different shapes of particles, in particular when whey proteins are used as raw material.

In a first embodiment, particles are of spherical shape. Such particles are also named macrospheres.

These particles can be provided with a vacuole, as a function of the composition in proteins.

Preferably, said particles have a size ranging from 10 to 400 μm, preferably with a mode of about 20-30 μm.

Such particles are advantageously obtained when the powder particles are spray dried in step c).

These particles may be interesting for the encapsulation of liquid product and for providing high viscosity into food liquids such as dairy preparations, creams and cheeses.

In a second embodiment, particles are of flake shape.

Preferably, said particles have a particles size ranging from 50 to 1000 μm.

Such particles are advantageously obtained when the powder particles are freeze dried in step c).

These particles may be interesting for providing high viscosity into food liquids such as dairy preparations, creams and cheeses.

## Composition of foodstuffs that contains said stabilized protein aggregate particles

The present invention relates also to the composition wherein stabilized protein aggregate particles according to the invention are dispersed.

Typically, said stabilized protein aggregate particles are interesting in that stabilized protein aggregate particles can be highly hydrated.

For example, 1 g of stabilized protein aggregate particles in the dry state can entrap from 20 to 50 g of water, and could then bring viscosity if added into dairy liquids.

The dry heating of powder particles (issued from a basic aqueous solution) was able to produce, insoluble, stabilized protein aggregate particles that have size and structure close to those of the powder particles, by reticulation the proteins in the powder particles.

This composition advantageously comprises from 0.5% to 10% by weight of the stabilized protein aggregate particles relative to the total weight of the said final composition.

Advantageously, said composition is selected among foodstuff composition, nutraceutical composition, medical composition and cosmetic composition.

By "foodstuff composition", it is for example intended a milk composition, and cheese, melted cheese, yoghurt, sauce, milk or dairy desert, custard or cream.

By "cosmetic composition", it is meant in particular a preparation intended to be applied to the skin, the hair, the teeth or the oral mucous.

By "nutraceutical composition", it is meant in particular the stabilized protein aggregate particles, made available in medicinal form and usually not associated with foods, and having a beneficial or protective physiological effect against chronic diseases.

The composition according to the invention thus contains the stabilized protein aggregate particles according to the invention, advantageously as an active principle.

**Example**

**A) Dry heated whey protein microparticles from a freeze-dried powder**

**A1) Materials and Methods**

*Materials*

A commercial whey protein isolate (WPI) is used as the whey protein source. WPI is dissolved at 150 g.kg$^{-1}$ into water, and then adjusted at pH 3.5, 6.5 and 9.5 with either 10 to 5 M HCl or 5 to 1 M NaOH. Solutions are immediately freeze dried, rapidly crushed, then conditioned to $a_w$ = 0.23 at 20°C with a saturated $CH_3COOH$ solution for 2 weeks. Then powders are heat treated at 100°C in tightly sealed tubes for 6h-36h. In order to obtain fine powder particles, the powders are first crushed roughly for 1 min with the Stomacher® and then, crushed with a coffee grinder (Prepline, SEB) for 40 seconds.

*Methods*

Determination of the powder browning and $a_w$

Color of powders is determined using the microcolour tristimulus colorimeter (Chromameter, CR-300; Minolta, Carrières-sur-Seine, France), with 2 repetitions on each powder.
Results are expressed by using the L*a*b* value according to CIE-LAB (Commission Internationale de l'Eclairage, 1971).
The browning index (BI) is calculated as in Maskan (2001) with the equations:

$$x = \frac{(a^* + 1.75L^*)}{(5.645L^* + a^* - 3.012b^*)}$$

$$BI = \left[\frac{100(x-0.31)}{0.17}\right]$$

The $a_w$ measurements on powders are performed on a Novasina aw-center RTD-200 (Lachen, Switzerland).

Preparation and fractionation of powder suspensions

A solution 1 is prepared by dissolution each dried heated powder into water and pH adjustment at 6.5 with HCl or NaOH to reach a final concentration of 10 g of powder per kg of suspension.
After stirring for 4 h to ensure a maximal solubilization, the suspensions are centrifuged at 10000 g for 15 min at 20°C and supernatants and pellets are collected separately as the pellets 1 and the solutions 2.
Six hundred of a 0.5 M, pH 4.6, acetate - acetic acid buffer are added to 10 mL of the solution 1, and the stirred suspensions reach pH 4.6 and are centrifuged in the same conditions than before, and the supernatant stored as the solution 3.

Analyses of the formation of the stabilized protein aggregate particles

Size distribution of particles is measured by using either a Nanosizer ZS or a Master sizer 2000 (both from Malvern Instrument, Worcestershire, UK) on solutions 1 and 2, depending on the range of size obtained. The solution 1 of the powder dry heated for 24 and 36 h are diluted in water at 1/10. The other solutions are not diluted. In the master sizer, we add about 0.5 ml in the 100 ml-cuvette of the flowing sample to reach the obscuration of 7-8%.
The mean diameter of the main population of particles and the mean diameter in volume (D[4,3]) of the population are reported for the Nanosizer and the Master sizer, respectively. Measurements are made in triplicate.
The wet weight of pellet 1 which contains the particles is measured. It is calculated in g for an equivalent of 100 g of suspension.
The pellets are then dried using the Speed Vac Concentrator SVC-100H (Savant Instrument) during 13 h at 45 °C (WY).
The dry pellet is weighed and calculated in g for an equivalent of 100 g of suspension (DY).

As 100 g of suspension also contain 1 g of dry heated powder, WY represents the wet yield of transfer of proteins into wet stabilized protein aggregate particles in g per 1 g of dry heated powder and DY represents the dry yield of transfer of proteins into dry stabilized protein aggregate particles in g of dry matter per 1 g of dry heated powder.

The water entrapment in the pellet is calculated in g per g of dried pellet as:

$$WE = [\text{weight pellet 1 before drying (g)} - \text{weight pellet 1 after drying (g)}] / \text{weight pellet 1 after drying (g)}.$$

Residual native proteins

The solutions 3 are injected on a gel filtration column (TSKG3000SWXL, 300x7.8 mm id., Phenomenex, Le Pecq, France) with a 0.05 M phosphate, 0.1 M NaCl, pH 7 buffer as eluent at 0.8 ml.min$^{-1}$. Standards of BSA, $\alpha$-lactalbumin ($\alpha$-la), $\beta$-lactoglobulin ($\beta$-lg) (Sigma, France) at increased concentrations are also prepared, and injected to quantify the amounts of residual native proteins soluble at pH 4.6. Solutions 3 are diluted 1/5 in the eluent and filtered on Acrodisc 0.2 $\mu$m membrane (Sigma Aldrich Chimie, Lyon, France) to remove insoluble particles. Fifty ml of samples or standards are injected. The area of proteins are quantified and compared to the area of each standard so as to get the residual concentration of each protein.

Phase contrast and confocal laser scanning microscopy

Microscopy of the powders is applied by a simple deposition of the powder samples on a glass lamella and observation in transmitted light by using a 4X objective on a light microscope (Olympus BX51, Rungis, France), a Qiclick camera and Archimed software (Microvision Instruments, Evry France).

RITC (0.8 mg) is dissolved in 95 $\mu$l dimethyl sulfoxide. Five $\mu$l of this solution are added to 0.5 ml of dry heated powder suspension to reach the final concentration of 0.084 mg.ml$^{-1}$. Five $\mu$l of sample are deposited on a glass lamellae and observed with a TE2000-E Nikon C1i inverted confocal laser scanning microscope (Nikon, Champigny-sur-Marne, France) using a x10 objective using a 543 nm wavelength helium-neon laser and a detection at 590 $\pm$ 25 nm. Each image is digitized in grey levels as a 512 x 512 pixel matrix representing 1273 x 1273 $\mu$m$^2$.

**A2) Results**

*Characterization of the dry heated powders*

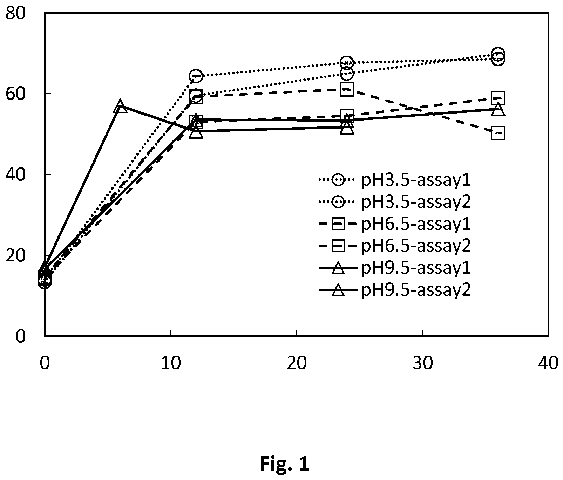

The Fig. 1 shows the browning index of powders in the time course of the dry heating. It increases mainly from 0 to 6-12 h and then level off, regardless the pH value.

*Characterization of the suspensions of dry heated powders*

Solution 1 obtained from the powder dry heated at pH 9.5 is trouble, with the presence of spangles that look iridescent, while the solutions 1 made from powder dry heated at pH 3.5 and 6.5 are only slightly cloudy.

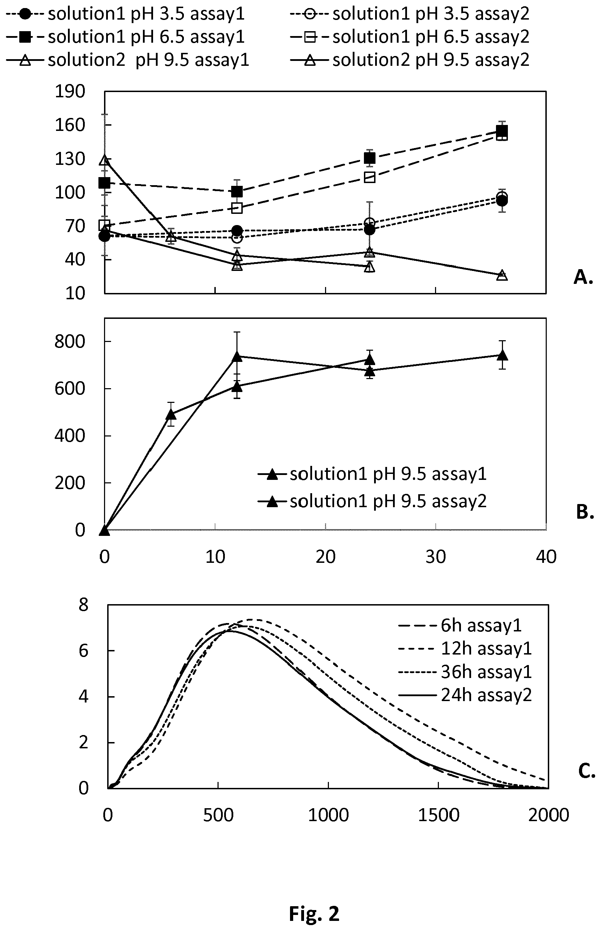

Size of particles in the solution 1 obtained by dissolution of dry heated powders are shown in Fig. 2. In the Fig. 2A, the size of particles in the solution 1 prepared from powders dry heated at pH 3.5 and 6.5 are shown, together with the size of particles in the solution 2 (supernatant of the solution 1) obtained from the powder dry heated at pH 9.5. In the Fig. 2B, the size of particles in the solution 1 prepared from powders dry heated at pH 9.5 are shown.

After dry heating for 36 h, at pH 3.5, the mean size of particle slightly increases to about 90 nm, while the increase was larger at pH 6.5, at 150 nm.

In the same time, the mean size of particles in the suspensions prepared from the powder dry heated at pH 9.5 dramatically increases to 700 $\mu$m (Fig. 2B), while the mean size of soluble particles present in the solution 2 decreases a little. Probably the soluble aggregate material present in the solution 1 at the beginning of the dry heating at pH 9.5 disappears into the large particles of 700 $\mu$m.

Particles of sizes 50-2000 $\mu$m, with a peak maximum at 500-600 $\mu$m, are present in this suspension (Fig. 2C), that explain the aspect of this suspension. We call these particles "stabilized protein aggregate particles".

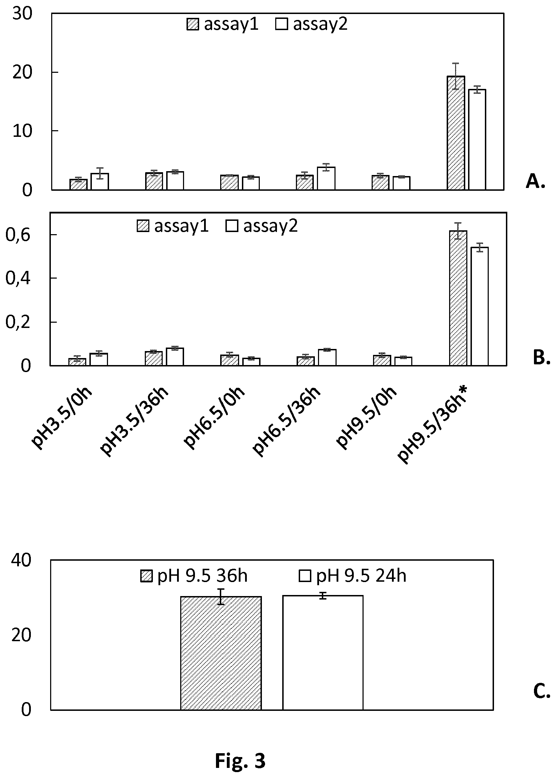

Fig. 3 shows the weight in wet pellet 1 and the weight in g of dried pellet obtained for 1 g of suspended powder after centrifugation of the solutions 1. Samples before and after 36 h of dry heating (24 h at pH 9.5 in the second trial) are shown.

At pH 9.5, 100 g of suspension containing 1 g of dry heated powder material yield to about 20 g of wet pellet

(exactly 19.28 $\pm$ 2.15 g and 17.04 $\pm$ 0.60, respectively for the 1st and 2nd trial, Fig. 3A), while at the other pH values, they lead to less than 3 g of wet pellet. Samples before dry heating also lead to less than 3 g of pellet, so that we can conclude that dry heating hardly increases the weight in pellet at pH 3.5 and 6.5.

The weight in dry material is also represented in the Fig. 3B, and reaches less than 0.07 g/g powder before dry heating or after dry heating at pH 3.5 or 6.5 and to more than 0.5 g/g powder, in the two trials at pH 9.5. More than half of the powder is transferred into stabilized protein aggregate particles by dry heating for 36 h.

Conversely, at pH 9.5, the weight in pellet is very large compared to the 1 g of powder material introduced.

Fig. 3C shows the weight in water entrapped in g of pellet obtained for the powder dry heated at pH 9.5. We have calculated that 1 g of particles obtained for the longest time of dry heating (36 h or 24 h) of the powder conditioned at pH 9.5 and recovered in the pellet at 10000 g for 15 min entrap ~ 30 g of water, which is a very large quantity.

Moreover, these particles appear stable in time for more than 2 weeks after their solubilization.

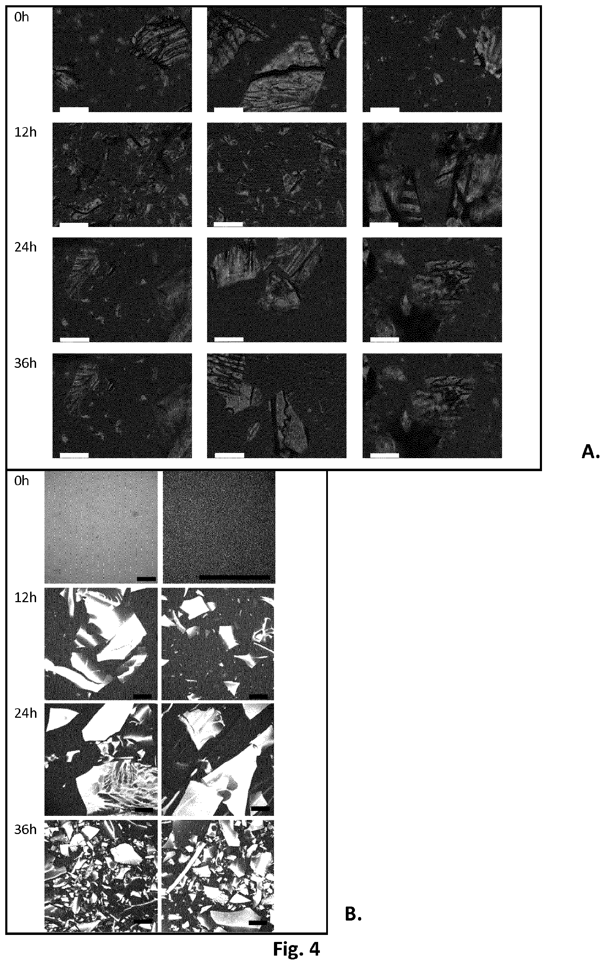

The presence of stabilized protein aggregate particles in the solution 1 obtained from the powders dry heated at pH 9.5 is confirmed by the observations of the solution at the confocal microscopy (Fig.4). The morphology of particles in the solution (B) is shown, together with that of powders grains (A) for comparison. While no aggregates larger than the resolution of the confocal microscope are visible on the solution 1 at 0 h of dry heating, stabilized protein aggregate particles of size larger than 200 $\mu$m are easily seen in the solution 1 prepared from the powder dry heated at pH 9.5, event at the shortest time, say 6 h or 12 h.

Powders are made of grains of very heterogeneous sizes of size 20-200 $\mu$m (Fig. 4). It appears that the size of particles in the solution 1 is not very different from the size of the grains of powder. If the size of stabilized protein aggregate particles in the solution 1 prepared from the powder dry heated at pH 9.5 as observed by confocal microscopy is compared to the size distribution as obtained with the master sizer, we can conclude that they are in agreement as they can belong to a population observed at 50-2000 $\mu$m. A hypothesis can be drawn that the stabilized protein aggregate particles observed in the solution 1 prepared from the powder dry heated at pH 9.5 could be the powder grains being insolubilized by the process as reticulated particles and containing a large quantity of aqueous phase.

*Composition of the stabilized protein aggregate particles in dry heated powders*

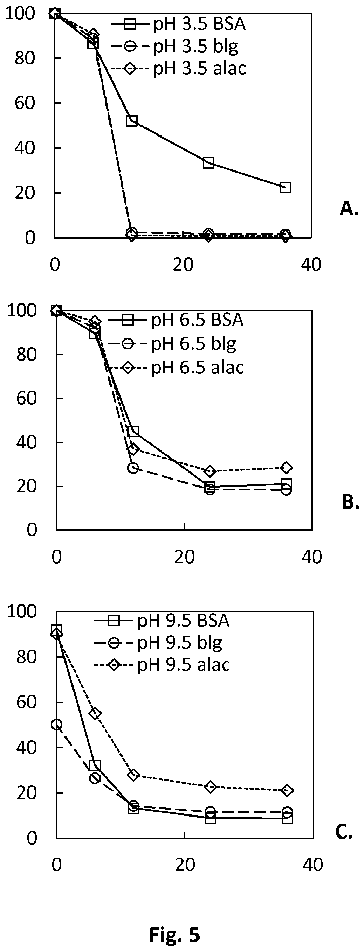

The concentrations of each residual soluble protein (BSA, $\alpha$lac, $\beta$lg) in the solution 3 representing the residual native proteins are shown in the Fig. 5A to C as determined by chromatography. Proteins are progressively denatured /aggregated with the time of dry heating. The contents are expressed in percentage (%) of their total contents in the untreated powder, say before the pH adjustment.

At pH 3.5 and 6.5, the content in proteins at 0 h of dry heating is 100 %. It means that the pH adjustment at 3.5 and 6.5 does not change the protein solubility at pH 4.6, say that there is no protein denaturation. At pH 9.5, at 0 h of dry heating, the content in soluble protein is less. Only 50 % of $\beta$lg, and 90 % of BSA and $\alpha$lac are still soluble. It means that the pH adjustment at 9.5 induces a denaturation/ aggregation of proteins, and mainly of $\beta$lg.

Then, the proteins denature with the time course of dry heating at all pH values. At 12 h of treatment, at least 50 % of proteins are no more soluble. There is still some soluble proteins at 36 h of dry heating, apart for $\alpha$lac and $\beta$lg at pH 3.5, probably explained by an acid hydrolysis of proteins at this pH value.

At pH 3.5 and 9.5, $\approx$ 20 % of soluble proteins are still present. Finally, the three proteins are denatured and probably incorporated into soluble aggregates of size 100-150 nm at pH 3.5 and 6.5 and into insoluble stabilized protein aggregate particles of size 50-2000 $\mu$m at pH 9.5.

## A3) Conclusions

Dry heating at pH 9.5 of a whey protein isolate powder at 100°C for 36 h at an $a_w$ close to 0.2 can produce stabilized protein aggregate particles (named also "macroparticles" or MICA for "Micron Aggregates"). The three proteins $\beta$lg, $\alpha$lac and BSA are equally integrated into these particles, and only 20 % of these proteins are still native at the end of the dry heating. Stabilized protein aggregate particles as collected in a pellet obtained at 10000 g for 15 min are highly hydrated and represent 20 g of the weight of the suspensions containing only 1 g of the dry heated powder and more than 50 % of the dry mass are transferred into these particles. Stabilized protein aggregate particles or MICA could bring viscosity if added into dairy liquids.

## B) Effect of the size of powder particles in the freeze-dried powder on the size of the stabilized protein aggregate particles

Same as in A) except that:

**B1) Materials and Methods**

*Materials*

A whey protein isolate (WPI) is used as the whey protein source. WPI is dissolved at 150 g.kg$^{-1}$ into water, then adjusted at pH 9.5 with 5 to 1 M NaOH. Solutions are immediately freeze-dried. The freeze-dried powder at pH 9.5 just after production is crushed in a coffee grinder for 3.5, 5 or 25 s, and conditioned at 0.23 aw and dry heated at 100°C for 12 h in tightly sealed tubes.

**B2) Results**

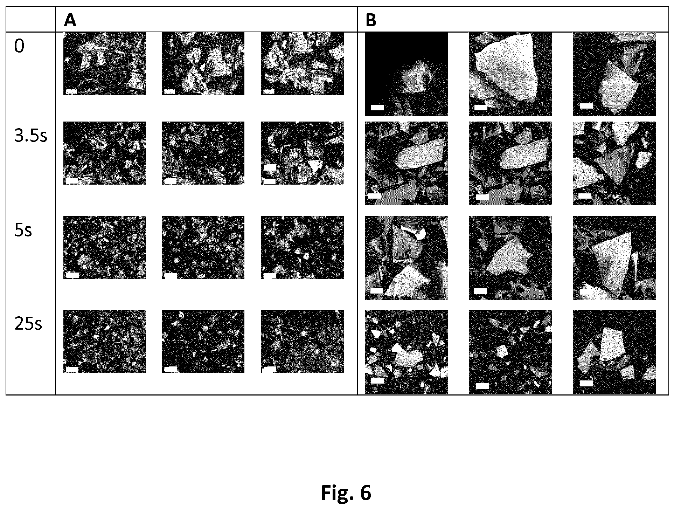

As shown in the Fig. 6, as the size of the powder grains decreases (A), the size of stabilized protein aggregate particles also decreases (B). This proves that the size of stabilized protein aggregate particles observed after a dry heating at pH 9.5 are related to the powder grain size and that reducing the size of the grains allows to produce stabilized protein aggregate particles of smaller size.

**C) Dry heated whey protein stabilized protein aggregate particles from a spray-dried powder**

**C1) Materiel and Methods**

*Materials*

A commercial whey protein isolate (WPI) is used.

*Preparation of powders*

The WPI is dissolved in distilled water at 150 g.kg$^{-1}$. The pH of the solution is adjusted to 9.5 with 5 to 1 M NaOH, and then rapidly spray dried on a spray drying pilot (Minor, GEA Niro, Denmark) with a flow of 2 liters.h$^{-1}$. Afterward, the powder is stored for 2 weeks at 20°C at a water activity ($a_w$) of 0.23. Finally, powders are heated at 100 °C for 3 to 72h in sealed Pyrex tube.

*Preparation and fractionation of powder suspensions*

Powders are reconstituted at 10 g.kg$^{-1}$ of powder in distilled water. Sodium azide is added at 0.2 g.kg$^{-1}$ to prevent microbial growth. The suspensions are stirred at 300 rpm at room temperature during approximately 2 h and then their pH are adjusted to 6.50 $\pm$ 0.03 with 32 % (w/w) HCl. Reconstitutions are repeated twice at different times.
Suspensions are centrifuged at 10,000 g for 15 min. This supernatant contains the native residual proteins and the soluble aggregates. The weight in wet is measured and calculated per 100 g of suspension (WY). In order to remove soluble proteins entrapped in the liquid phase of the pellet, the supernatant is replaced by the same weight of pH 6.5 $KH_2PO_4$ - NaOH 10 mM buffer, then stirred and centrifuged again at 10,000 g for 15 min. The pellets are then dried using the Speed Vac Concentrator SVC-100H (Savant Instrument) during 13 h at 45 °C, weighed and the dry weight was calculated in g for an equivalent of 100 g of suspension (DY). As 100 g of suspension contains 1 g of dry heated powder, the weight in g par 100 g suspension also represent the weight in g per 1 g of dry heated powder. These measurements are performed 4 times.

*Determination of powder grain and stabilized protein aggregate particles size distribution*

Size distribution of grains in the powders obtained before and after 36 h of dry heating is measured using a Mastersizer 2000 (Malvern Instruments, UK) equipped with a Scirocco dry dispersion were measured in the range 0.02 - 2000 $\mu$m. Measurements are repeated thrice.
Size distribution of stabilized protein aggregate particles in suspensions is performed using Mastersizer equipped with the hydro wet dispersion unit. For measurements, the suspensions are dispersed into 60 mL of ultra-pure water in the unit to reach a 8% obscuration. The refractive index is fixed at 1.545. Measurements are performed in thrice on two different samples.

*Waster entrapped in the pellet*

Proteins in supernatants are quantified by UV absorption (UVmc2, Safas, France) at 280 nm using an absorption

coefficient $\varepsilon_{280nm}$ = 1.14 L.g$^{-1}$.cm$^{-1}$.

The water entrapped in the pellet per 1 g of dried pellet is calculated as follow:

$$WE\ (g.g\text{-}1) = [WY - DY] / DY$$

*Microstructure of stabilized protein aggregate particles by confocal laser scanning microscopy (CLSM)*

Fifty $\mu$l of dry heated powder suspensions are deposited on a glass lamella with 5 $\mu$l of 1 % (w/v) Nile. The lamellas are observed with a TE2000-E inverted confocal laser scanning microscope (CLSM) equipped with a Nikon x20 oil-immersion objective and a Nikon C1 Si imaging system (Nikon, Champigny-sur-Marne, France). An He-Ne laser with an excitation of 632 nm is used at 51 % of the laser powder. The emitted light is recorded at 650 nm. The software used for image acquisition is EZ-C1 version 3.40 (Nikon). Each image is digitized as a 512 x 512 pixel2 matrix representing 636 x 636 $\mu$m2.

**C2) Results and discussion**

*Powder properties*

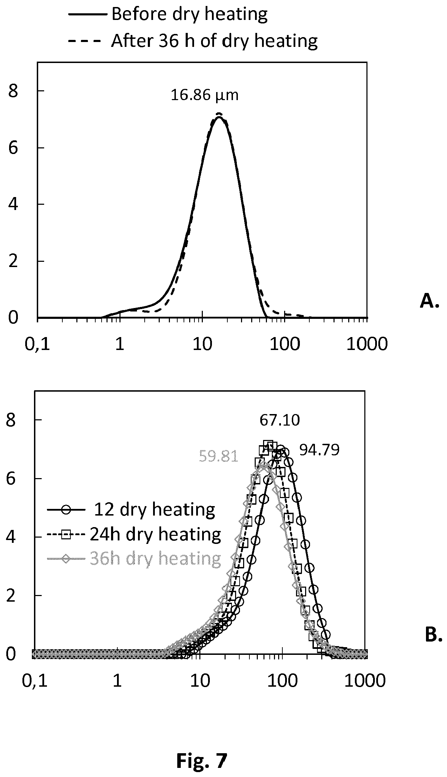

The size distribution of powder before dry heating shows that powder grains of size 1 to 100 $\mu$m are present, with a size powder centered around 17 $\mu$m (Fig. 7). After 36 h of dry heating, the size distribution is very similar.

*Characterization of stabilized protein aggregate particles suspensions*

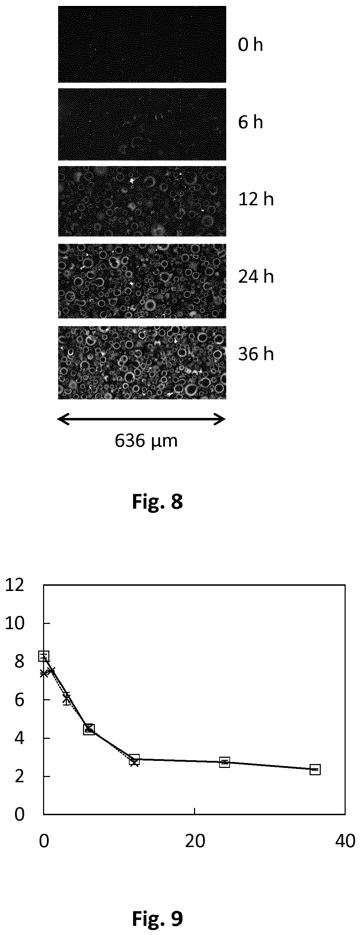

As shown by confocal microscopy (Fig. 8), while no particle are visible at 0 h of dry heating, spherical stabilized protein aggregate particles appear in the time course of dry heating. At 6 h of heating, we only see some particles, but no complete spheres, while at 12 h, complete spheres are present and their content increases till 36 h of heating. The stabilized protein aggregate particles are of spherical shape with an open hollow structure. According to Sadek et al. (2013), the shape of whey protein isolate powders is of spherical shape with an open hollow structure.

The size of the stabilized protein aggregate particles after 36 h of dry heating is estimated to be between 5 and 50 $\mu$m according to the Fig. 8, with a mean size $\approx$ 20 $\pm$ 7 $\mu$m as measured on about 50 particles directly on the micrograph. The size as measured by the Mastersizer method was estimated at 60-94 $\mu$m, a larger value than that obtained from the micrographs, but not too far. The peak maximum of the size distribution of stabilized protein aggregate particles decreases a little during the time course of the dry heating, i.e. from 94 to 60 $\mu$m.

The concentration in residual native proteins is shown in the Fig. 9. After 36 h of dry heating, ~ 2.4 g.L$^{-1}$ of residual native proteins are still present in the suspensions.

*Yield and moisture contents of stabilized protein aggregate particles*

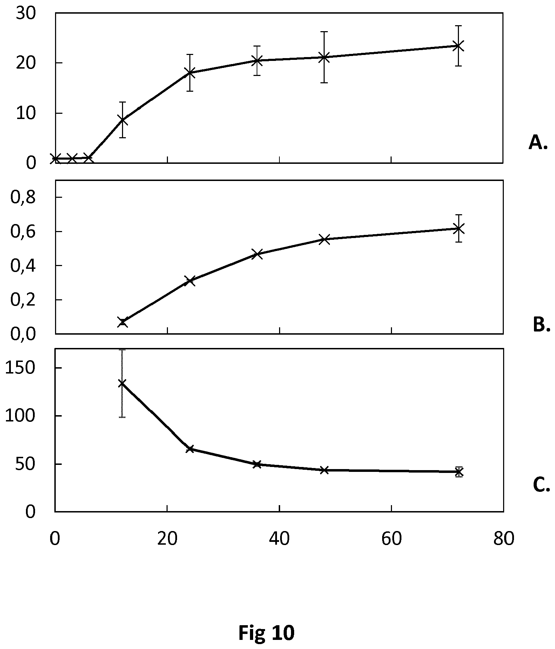

The weight of wet and dry pellets increase with the time course of dry heating. After 72 h of dry heating, 1 g of dry heated powder re-suspended in water leads to 23 $\pm$ 4 g of wet pellet and 0.62 $\pm$ 0.08 g of the powder is transferred into the pellet of stabilized protein aggregate particles by the dry heating (Fig. 10). The water entrapped in the pellet decreases with the time of dry heating. One g of dry heated powder is able to entrap 65 times and 42 times its weight after 24 h and 72 h of dry heating, respectively.

As the spray-dried powder is an open porous structure, the stabilized protein aggregate particles contain a very large quantity of water.

**C3) Conclusion**

The dry heating at 100°C of a spray-dried WPI powder pre-conditioned at pH 9.5 is able to produce stabilized protein aggregate particles that have a size and a structure related to the initial powder grains, by reticulation the proteins in the powder grain. In the case of a spray-dried powder, dry heating led to the formation of stabilized protein aggregate particles of size ranging from 20 to 90 $\mu$m with an internal cavity, as is the whey protein powder that entrapped a large quantity of solvent phase.

**D) Influence of lactose on the formation of stabilized protein aggregate particles by dry heating**

**D1) Materials**

A commercial whey protein isolate (WPI) is used. α-lactose monohydrate (4-O-β-D-Galactopyranosyl-alpha-D-glucose) and purchased from Sigma-Aldrich.

**D2) Methods**

Preparation of powders

Different quantities (0 to 30 g/kg) of α-lactose monohydrate are first dispersed in distilled water. The WPI powder is then added to reach a final concentration of 150 g of powder.kg$^{-1}$ with stirring. The ratio in weight of lactose to protein (L/P) is adjusted between 0 (no added lactose) and 2.09 g/10 g protein. The pH of the solutions is then adjusted to 9.5 with 5 to 1 mol.L$^{-1}$ NaOH, and the solution is then rapidly freeze-dried.
In order to obtain fine powder particles, the freeze-dried powders are first crushed roughly for 1 min with the Stomacher and then crushed with a coffee grinder (Prepline, SEB) for 40 seconds. Afterward, the powders are kept at 20°C at an aw of 0.25 ± 0.01. The water activity ($a_w$) of the powders is checked using an $a_w$ meter (Decagon Aqualab 3TE). Powders are then heated at 100 °C for 3 or 36 h in tightly sealed Pyrex tubes.

Preparation of suspension of stabilized protein aggregate particles

All the powders are reconstituted at 10 g of powder.kg$^{-1}$ in distilled water. Sodium azide is added at 0.2 g of powder.kg$^{-1}$ to prevent microbial growth. The suspension is stirring overnight at 300 rpm at room temperature. Then, the pH is slowly adjusted to 6.50 ± 0.03 with 32 % (w/w) hydrochloric acid. Fractions of 2 g of the suspensions are centrifuged at 10,000 g for 15 min to recover the pellet that contains the stabilized protein aggregate particles.

Yield in wet and dry pellet and moisture content of the stabilized protein aggregate particles

The wet weight of pellet that contains the stabilized protein aggregate particles is measured. It is calculated in g for an equivalent of 100 g of suspension (WY). The pellets are then dried using the Speed Vac Concentrator SVC-100H (Savant Instrument) during 13 h at 45 °C. The dry pellet are weighed and calculated in g for an equivalent of 100 g of suspension (DY). As 100 g of suspension also contains 1 g of dry heated powder, WY and DY represent the dry and wet yields of transfer of protein into stabilized protein aggregate particles.
The moisture content (MC) of the pellet is calculated in g per 100 g of wet pellet as:

$$MC = 100 \times [\text{weight before drying (g)} - \text{weight after drying (g)}] / \text{weight before drying (g)}$$

Confocal laser scanning microscopy (CLSM)

The suspensions are diluted 10 times in distillated water. 50 μl of sample are deposited on lamellae with 5 μl of Nile Blue 1 % to stained proteins. The sample is then observed with TE2000-E inverted confocal laser scanning microscope (CLSM) equipped with a Nikon C1Si imaging system (Nikon, Champigny-sur-Marne, France). A He-Ne laser with an excitation of 632 nm and 51 % intensity is used. The emitted light is recorded at 650 nm. The analyses are made with a Nikon x20 oil-immersion objective. The software used for image acquisition was EZ-C1 version 3.40 (Nikon). Each image is digitized as a 512 x 512 pixels$^2$ matrix representing 1273 x 1273 μm$^2$.

**D3) Results**

Characterization of the suspensions of stabilized protein aggregates particles

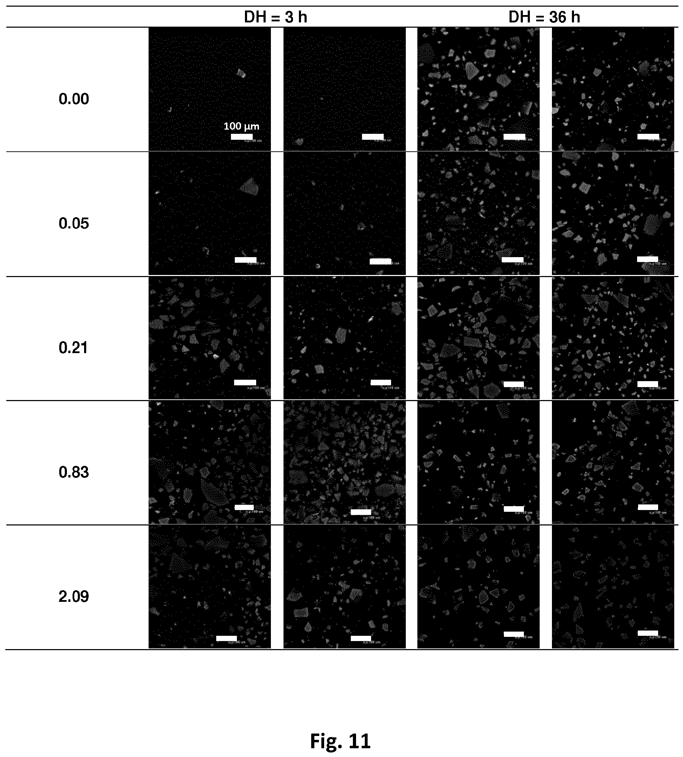

The pictures of stabilized protein aggregate particles obtained by CLSM are shown in Fig. 11. For a dry heating for 3 h of WPI with less than 0.05 g of lactose added/10 g of protein, very poor quantity of stabilized protein aggregate particles is formed. For any other sample, there are a lot of stabilized protein aggregate particles that have angular shapes.

Yield and moisture content of stabilized protein aggregate particles

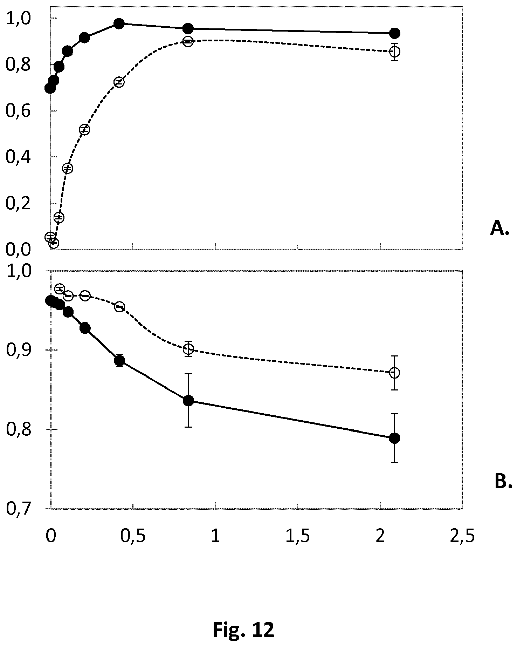

As was observed by CLSM, there are almost no stabilized protein aggregate particles in the powder at less 0.02 g of lactose added/10 g of protein after 3 h of dry heating as shown by the yield in dry pellet (Fig. 12). Then, the yield in dry pellet increases with the increase in lactose added until 0.83 g of lactose added/10 g of protein and then decreases.

After 36 h of dry heating, even without any added lactose, the weight in dry pellet was higher than 0.6 g per 1 g of dry heated powder in the suspension. The weight in dry pellet increases with the increase in lactose added until 0.41 g of lactose added/10 g of protein and then decreases.

The moisture content in the pellet containing the stabilized protein aggregate particles decreases with the increase in lactose added, from 95% to 85% after 3 h of dry heating and to 75% after 36 h of dry heating.

Dry heating powder for 36 h without added lactose is equivalent to dry heating powder for 3 h with 0.42 g of lactose added/10 g of protein, either considering the yield in dry stabilized protein aggregate particles or their moisture contents.

**D4) Conclusion**

Kinetics of formation of stabilized protein aggregate particles is increased by adding a small quantity of lactose at WPI powder before the dry heating. Lactose is an interesting ingredient for crosslinking proteins during their dry heating.

**Claims**

1. A process for the preparation of stabilized protein aggregate particles, wherein said process comprises the following steps:

   a) providing an aqueous solution wherein are dispersed proteins and at least one reducing sugar,
   b) adjusting the pH of the aqueous solution obtained in step a), to a pH above 7,
   c) drying the aqueous solution obtained in step b), to form powder particles comprising said proteins and said at least one reducing sugar,
   d) dry heating said powder particles obtained in step c), to form said stabilized protein aggregate particles.

2. A process according to claim 1, wherein step a) comprises:

   - a dispersion operation of said proteins and of said at least one reducing sugar, in an aqueous medium, or
   - providing proteins in the form of protein isolate or protein concentrate, whereof proteins content is of at least 35% w/w.

3. A process according to any one of the claims 1 or 2, wherein, in step a), proteins are selected in the group consisting of whey or milk proteins, egg proteins, vegetable proteins.

4. A process according to claim 3, wherein whey proteins are selected from the group consisting of whey protein isolate (WPI), whey protein concentrate (WPC), whey powder, milk protein concentrate (MPC), milk protein isolate (MPI) and skim milk powder.

5. A process according to any one of the claims 1 to 4, wherein the at least one reducing sugar is selected from the group consisting of lactose, glucose, galactose, maltose, fructose or their derivatives including glucose-6-phosphate and any oligosaccharide or saccharide conjugate that contains a reducing sugar.

6. A process according to any one of the claims 1 to 5, wherein the at least one reducing sugar is inherently present with the proteins or it is added.

7. A process according to any one of the claims 1 to 6, wherein aqueous solution comprises a ratio of 1 g protein for 0.02 to 0.6g reducing sugar.

8. A process according to any one of the claims 1 to 7, wherein, in step b), the pH is adjusted from 7 to 11.5, and preferably from 9 to 11.5.

9. A process according to any one of the claims 1 to 8, wherein the drying in step c) comprises a drying operation selected among freeze drying and spray drying.

10. A process according to any one of the claims 1 to 9, wherein, after drying in step c) and before dry heating in step d), said process comprises an operation of adjusting the water activity of the powder particles.

11. A process according to claim 10, wherein said operation of adjusting the water activity of said powder particles is implemented to obtain a water activity from 0.1 and 0.5.

12. A process according to any one of the claims 1 to 11, wherein, in step d), the powder particles are dry heated:

- at a temperature between 60 and 120 °C, and
- for a time range between 30 minutes and 4 days.

13. Protein aggregate particles obtained by the process according to any one of the claims 1 to 12.

14. Protein aggregate particles according to claim 13, wherein said particles are:

- of spherical shape, possibly provided with a vacuole, advantageously with a particles size from 10 to 400 $\mu$m, or
- of flake shape, advantageously with a particles size from 50 to 1000 $\mu$m.

15. A composition wherein are dispersed protein aggregate particles according to claims 13 or 14, advantageously selected among foodstuff composition, medical composition, cosmetic composition.

**Fig. 1**

Fig. 2

Fig. 3

A.

B.

**Fig. 4**

Fig. 5

**Fig. 6**

—— Before dry heating

- - - After 36 h of dry heating

**A.**

**B.**

**Fig. 7**

**Fig. 8**

**Fig. 9**

**Fig 10**

EP 3 384 779 A1

Fig. 11

24

**Fig. 12**

Europäisches
Patentamt
European
Patent Office
Office européen
des brevets

## EUROPEAN SEARCH REPORT

Application Number

EP 17 30 5408

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 800 544 A1 (STICHTING TECHNOLOGISCH TOP IN [NL]) 27 June 2007 (2007-06-27) * paragraph [0001] - paragraph [0043]; example 2 * | 1-15 | INV. A23C1/04 A23C1/05 A23C1/08 A23C1/14 |
| X | HIROFUMI ENOMOTO ET AL: "Glycation and Phosphorylation of [beta]-Lactoglobulin by Dry-Heating: Effect on Protein Structure and Some Properties", JOURNAL OF AGRICULTURAL AND FOOD CHEMISTRY, vol. 55, no. 6, 1 March 2007 (2007-03-01), pages 2392-2398, XP055381800, ISSN: 0021-8561, DOI: 10.1021/jf062830n * Abstract; page 2392, column 2, paragraph 1 * * page 2393, column 1, paragraph 2 - column 2, paragraph 2 * * page 2397, column 2, paragraph 2 * | 1-15 | A23C1/16 A23C9/152 A23C9/154 A23C9/156 A23C9/16 A23C21/06 A23C21/08 A23J3/00 A23J3/04 A23J3/08 A23J3/14 A23L33/17 A23L33/185 |
| X | US 2011/268680 A1 (ZHONG QIXIN [US]) 3 November 2011 (2011-11-03) * paragraph [0003] - paragraph [0007] * * paragraph [0046] - paragraph [0057]; figure 32; examples 1, 2, 5 * | 1-15 | TECHNICAL FIELDS SEARCHED (IPC) A23C A23J A23L |
| A | WO 00/18249 A1 (NEW ZEALAND DAIRY RES INST [NZ]; BOLAND MICHAEL JOHN [NZ]; HILL JEREMY) 6 April 2000 (2000-04-06) * page 1, line 8 - page 9, line 8 * * page 12, line 27 - page 15, line 11; table 3 * | 1-15 | |

-/--

The present search report has been drawn up for all claims

| Place of search | Date of completion of the search | Examiner |
|---|---|---|
| Munich | 16 June 2017 | Alevisopoulos, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 17 30 5408

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | MUHAMMAD GULZAR ET AL: "Influence of pH on the dry heat-induced denaturation/aggregation of whey proteins", FOOD CHEMISTRY, ELSEVIER LTD, NL, vol. 129, no. 1, 14 April 2011 (2011-04-14), pages 110-116, XP028227300, ISSN: 0308-8146, DOI: 10.1016/J.FOODCHEM.2011.04.037 [retrieved on 2011-04-20] * Abstract; page 110, column 2, paragraph 1 - page 111, column 2, paragraph 4 * * page 114, column 2, paragraph 3 - page 116, column 1, paragraph 2 * ----- | 1-15 | A23L33/19 A23L33/125 |

TECHNICAL FIELDS
SEARCHED     (IPC)

The present search report has been drawn up for all claims

| Place of search | Date of completion of the search | Examiner |
|---|---|---|
| Munich | 16 June 2017 | Alevisopoulos, S |

EPO FORM 1503 03.82 (P04C01)

page 2 of 2

## ANNEX TO THE EUROPEAN SEARCH REPORT
## ON EUROPEAN PATENT APPLICATION NO.

EP 17 30 5408

This annex lists the patent family members relating to the patent documents cited in the above-mentioned European search report.
The members are as contained in the European Patent Office EDP file on
The European Patent Office is in no way liable for these particulars which are merely given for the purpose of information.

16-06-2017

| Patent document cited in search report | | Publication date | Patent family member(s) | | Publication date |
|---|---|---|---|---|---|
| EP 1800544 | A1 | 27-06-2007 | EP | 1800544 A1 | 27-06-2007 |
| | | | EP | 1962613 A1 | 03-09-2008 |
| | | | US | 2009155443 A1 | 18-06-2009 |
| | | | WO | 2007073189 A1 | 28-06-2007 |
| US 2011268680 | A1 | 03-11-2011 | NONE | | |
| WO 0018249 | A1 | 06-04-2000 | AU | 5887399 A | 17-04-2000 |
| | | | WO | 0018249 A1 | 06-04-2000 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **GULZAR et al.** *Food Chemistry,* 2011, vol. 129, 110-116